# EUROPEAN PATENT APPLICATION

(11) **EP 4 098 978 A2**
(43) Date of publication of application: **07.12.2022**
(21) Application number: 22201266.8
(22) Date of filing: 13.10.2022
(51) Int. Cl.: G01C 21/36

(54) **DATA PROCESSING METHOD AND APPARATUS FOR VEHICLE, ELECTRONIC DEVICE, AND MEDIUM**

(30) Priority: 14.10.2021 CN 202111200485
(71) Applicant: Apollo Intelligent Connectivity (Beijing) Technology Co., Ltd., Beijing 100176 (CN)
(72) Inventor: DENG, Sunan, Beijing, 100176 (CN); LIN, Shulong, Beijing, 100176 (CN); WU, Junfa, Beijing, 100176 (CN)
(74) Representative: Zinkler, Franz

(57) **Abstract**

The present disclosure provides a data processing method and apparatus for a vehicle, a device, a medium, and a product, which relate to a field of an intelligent transportation technology, in particular to fields of autonomous driving, Internet of Vehicles and intelligent cockpit. The data processing method for the vehicle includes: determining a target format setting information associated with target data for a vehicle, in response to an acquisition of the target data; selecting, from a plurality of candidate format data, target format data associated with the target format setting information; and processing the target data based on the target format data to generate data to be displayed.

## Description

### TECHNICAL FIELD

The present disclosure relates to a field of an intelligent transportation technology, in particular to fields of autonomous driving, Internet of Vehicles and intelligent cockpit, and more specifically, to a data processing method and apparatus for a vehicle, an electronic device, a medium, and a program product.

### BACKGROUND

In a related art, a vehicle may render and display vehicle-related data through a rendering engine. However, rendering engines in the related art have a poor rendering effect, a low efficiency, and a high cost.

### SUMMARY

The present disclosure provides a data processing method and apparatus for a vehicle, an electronic device, a storage medium, and a program product.

According to an aspect of the present disclosure, a data processing method for a vehicle is provided, including: determining a target format setting information associated with target data for a vehicle, in response to an acquisition of the target data; selecting, from a plurality of candidate format data, target format data associated with the target format setting information; and processing the target data based on the target format data to generate data to be displayed.

According to another aspect of the present disclosure, a data processing apparatus for a vehicle is provided, including: a determination module configured to determine a target format setting information associated with target data for a vehicle, in response to an acquisition of the target data; a selection module configured to select, from a plurality of candidate format data, target format data associated with the target format setting information; and a generation module configured to process the target data based on the target format data to generate data to be displayed.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the data processing method for the vehicle as described above.

According to another aspect of the present disclosure, a non-transitory computer-readable storage medium having computer instructions therein is provided, and the computer instructions are configured to cause a computer to implement the data processing method for the vehicle as described above.

According to another aspect of the present disclosure, a computer program product containing a computer program is provided, and the computer program, when executed by a processor, causes the processor to implement the data processing method for the vehicle as described above.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 schematically shows an application scenario of a data processing method and apparatus for a vehicle according to embodiments of the present disclosure;
FIG. 2 schematically shows a flowchart of a data processing method for a vehicle according to embodiments of the present disclosure;
FIG. 3 schematically shows a schematic diagram of a data processing method for a vehicle according to embodiments of the present disclosure;
FIG. 4 schematically shows a schematic diagram of a data processing method for a vehicle according to other embodiments of the present disclosure;
FIG. 5 schematically shows a block diagram of a data processing apparatus for a vehicle according to embodiments of the present disclosure; and
FIG. 6 shows a block diagram of an electronic device for performing data processing for implementing embodiments of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

The terms used herein are for the purpose of describing specific embodiments only and are not intended to limit the present disclosure. The terms "comprising", "including", "containing", etc. used herein indicate the presence of the feature, step, operation and/or part, but do not exclude the presence or addition of one or more other features, steps, operations or parts.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

In a case of using the expression similar to "at least one of A, B and C", it should be explained according to the meaning of the expression generally understood by those skilled in the art (for example, "a system including at least one of A, B and C" should include but not be limited to a system including only A, a system including only B, a system including only C, a system including A and B, a system including A and C, a system including B and C, and/or a system including A, B and C).

Embodiments of the present disclosure provide a data processing method for a vehicle, including: determining a target format setting information associated with target data for a vehicle, in response to an acquisition of the target data; selecting, from a plurality of candidate format data, target format data associated with the target format setting information; and processing the target data based on the target format data to generate data to be displayed.

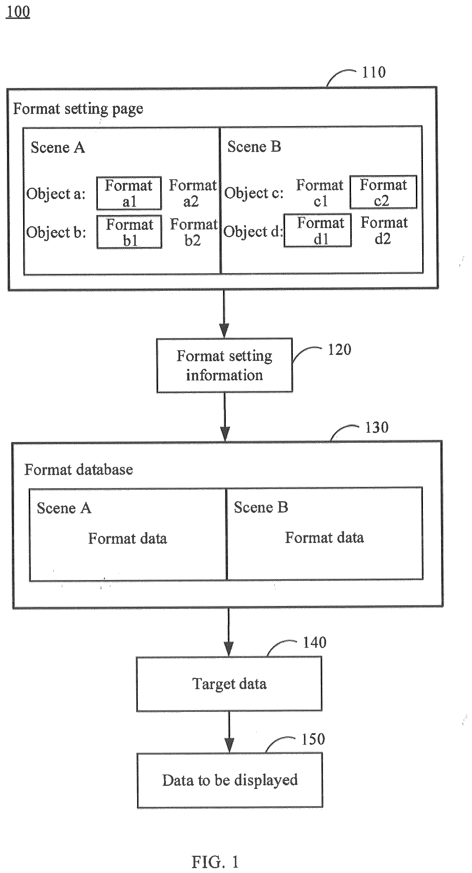

FIG. 1 schematically shows an application scenario of a data processing method and apparatus for a vehicle according to embodiments of the present disclosure. It should be noted that FIG. 1 is only an example of the application scenario to which embodiments of the present disclosure may be applied to help those skilled in the art understand the technical content of the present disclosure, but it does not mean that embodiments of the present disclosure may not be applied to other devices, systems, environments or scenarios.

As shown in FIG. 1, an application scenario 100 of the present disclosure includes, for example, a format setting page 110 and a format database 130.

For example, the format setting page 110 may be provided by different operating systems, which may include but not be limited to an Android system and an embedded real-time operating system (e.g., QNX).

A format setting may be performed by a developer for different scenes on the format setting page 110. The scene may be, for example, related to a vehicle. For example, scene A may be a navigation scene, and scene B may be a self-parking scene.

For each scene, a corresponding format may be selected by the developer for different objects on the format setting page 110. The objects may be, for example, objects to be displayed. For example, for the navigation scene, the objects may include a vehicle, a pedestrian, a lane line, and so on. For example, for a vehicle object, the selected format may include a display color, a vehicle shape, and so on.

After the corresponding format is selected by the developer on the format setting page 110, a format setting information 120 may be generated. Then, if it is required to perform a real-time rendering on target data 140 of the vehicle during a driving of the vehicle, format data associated with the format setting information 120 may be selected from a format database 130, then a rendering may be performed on the target data 140 based on the format data to generate data to be displayed 150, and the data to be displayed 150 may be displayed on a display screen of the vehicle.

It may be understood that through embodiments of the present disclosure, the vehicle may render and display different scenes in different formats as required, so that a rendering effect of the vehicle is improved. In addition, the format setting may be performed by the developer through the format setting page 110, so that a development cost and a development threshold of the rendering engine are reduced, and a development efficiency is improved.

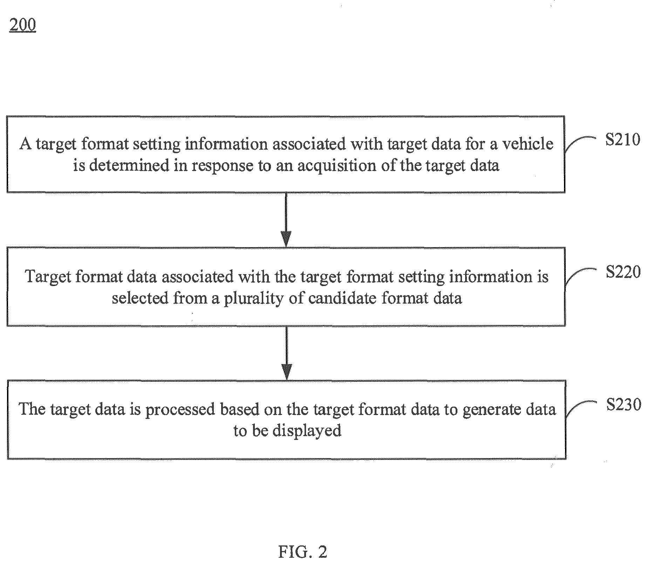

Embodiments of the present disclosure provide a data processing method for a vehicle. A data processing method for a vehicle according to exemplary embodiments of the present disclosure will be described below with reference to FIG. 2 to FIG. 4 in combination with the application scenario of FIG. 1.

FIG. 2 schematically shows a flowchart of a data processing method for a vehicle according to embodiments of the present disclosure.

As shown in FIG. 2, a data processing method 200 for a vehicle in embodiments of the present disclosure may include, for example, operations S210 to S230.

In operation S210, a target format setting information associated with target data for a vehicle is determined in response to an acquisition of the target data.

In operation S220, target format data associated with the target format setting information is selected from a plurality of candidate format data.

In operation S230, the target data is processed based on the target format data to generate data to be displayed.

For example, the vehicle may include an autonomous vehicle. The vehicle may render the data to be displayed through a rendering engine. The rendering engine may include a format database for storing format data. During a driving of the vehicle, the target data for the vehicle may be acquired, then a rendering may be performed on the target data according to the format data stored in the format database to obtain the data to be displayed, and the data to be displayed may be displayed on a display screen of the vehicle.

For example, a corresponding format setting information may be preset by the developer for different data of the vehicle, that is, the format setting information may include an information for different data. After current target data of the vehicle is acquired, the target format setting information associated with the target data may be determined from the format setting information.

A plurality of candidate format data, for example, may be stored in the format database, and different candidate format data are used to process different data. After the target format setting information is acquired, the target format data associated with the target format setting information is determined from the plurality of candidate format data. Then, a rendering may be performed on the target data using the target format data, so as to obtain the data to be displayed. The data to be displayed may be displayed on the display screen of the vehicle.

According to embodiments of the present disclosure, for the target data of the vehicle, the target format setting information associated with the target data may be determined, and then the target format data associated with the target format setting information may be determined from the plurality of candidate format data, so as to perform a rendering on the target data based on the target format data. Therefore, the technical solution of embodiments of the present disclosure may be implemented to perform different rendering on data according to actual needs, so that a rendering diversity of the vehicle is improved, and different rendering needs may be met.

In addition, by providing the format database, the format setting information may be acquired by the developer through a format setting during a development of a format rendering function, and the corresponding format data for data rendering may be selected from the format database based on the format setting information during the data rendering of the vehicle, so that a development cost and a development threshold of the format rendering function are reduced, and a development efficiency is improved.

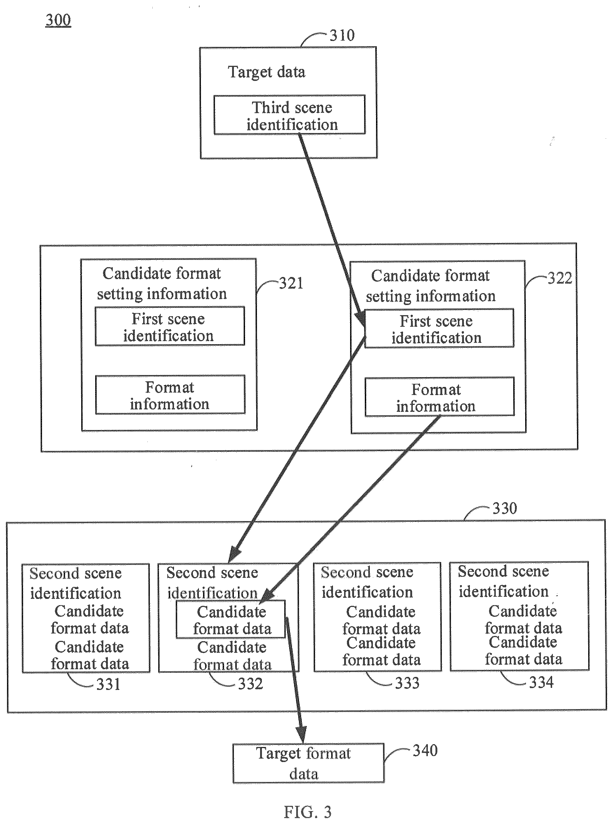

FIG. 3 schematically shows a schematic diagram of a data processing method for a vehicle according to embodiments of the present disclosure.

As shown in FIG. 3, in an embodiment 300 of the present disclosure, target data 310 for a vehicle includes, for example, traffic data and operation data of the vehicle. The traffic data may include, for example, motion data or location data of vehicles, pedestrians, etc. on a road. The operation data of the vehicle may include, for example, a speed, a position, a fuel consumption, etc. of the vehicle.

For example, the target data 310 may include, for example, a third scene identification, which may include, for example, an identification for a navigation scene, an identification for a self-parking scene, an identification for a scene of a data display using a dashboard, an identification for a scene of a data display using a Head-Up Display (HUD) system, and so on.

A format setting may be pre-performed by the developer to obtain a plurality of candidate format setting information 321 and 322. Each candidate format setting information may include, for example, a first scene identification and a format information.

The first scene identification may include, for example, an identification for a navigation scene, an identification for a self-parking scene, an identification for a scene of a data display using a dashboard, an identification for a scene of a data display using a Head-Up Display (HUD) system, and so on.

The format information may include, for example, a format for an object, and the object may include, for example, a vehicle, a pedestrian, a lane line, etc. For example, for a vehicle object, the format information may include a display color (such as blue) of the vehicle, a shape of the vehicle, and so on.

For example, the first scene identification of the candidate format setting information 321 may be an identification for a navigation scene, and the first scene identification of the candidate format setting information 322 may be an identification for a self-parking scene. The candidate format setting information may further include other format setting information. The first scene identification of other format setting information may include, for example, an identification for a scene of a data display using a dashboard, an identification for a scene of a data display using a Head-Up Display (HUD) system, and so on.

When the vehicle currently needs to perform a self-parking,' the target data 310 for self-parking may be acquired, and the target data 310 may include, for example, traffic data around a parking space, a current speed of the vehicle, and so on. The third scene information of the target data 310 for self-parking may include, for example, an identification for a self-parking scene.

After the target data 310 for the vehicle is acquired, a target format setting information is determined from the plurality of candidate format setting information 321 and 322. The first scene identification of the target format setting information may be, for example, consistent with the third scene identification. For example, the candidate format setting information 322 is determined as the target format setting information, the first scene identification of the candidate format setting information 322 and the third scene identification are both, for example, the identification for the self-parking scene, and the format information in the candidate format setting information 322 is determined as the target format information.

For example, the plurality of candidate format data 330 may be divided into a plurality of groups 331, 332, 333, 334, and each of the plurality of groups 331, 332, 333, 334 has a second scene identification. The second scene identification includes, for example, an identification for a navigation scene, an identification for a self-parking scene, an identification for a scene of a data display using a dashboard, an identification for a scene of a data display using a Head-Up Display (HUD) system, and so on. Taking the group 332 as an example, the second scene identification of the group 332 may be, for example, the identification for the self-parking scene, which indicates that the candidate format data in the group 332 is format data used to perform a data rendering on the target data 310 for self-parking.

After the candidate format setting information 322 is determined as the target format setting information, a target group may be selected from the plurality of groups 331, 332, 333 and 334 based on the first scene identification of the target format setting information, and the second scene identification of the target group is consistent with the first scene identification. For example, the group 332 is determined as the target group, and the second scene identification of the target group is consistent with the first scene identification, for example, both are the identification for the self-parking scene.

Then, target format data may be selected from the plurality of candidate format data in the target group (the group 332) based on the target format information of the target format setting information (the candidate format setting information 322).

For example, the plurality of candidate format data in the target group (the group 332) may include format data for rendering a display color of the vehicle, and format data for rendering a shape of the vehicle. If the target format information in the target format setting information (the candidate format setting information 322) is, for example, a display color information (such as blue) for the vehicle, the candidate format data for rendering the display color of the vehicle is determined from the group 332 as target format data 340. If the target data 310 includes position data of a vehicle in front (the position data includes, for example, contour data of vehicle), a color rendering may be performed on the contour data of the vehicle in front based on the target format data 340, and the rendered vehicle contour is blue. If the target data 310 includes speed data of the vehicle in front, a color rendering is performed on the speed data based on the target format data 340, and the rendered speed data is displayed in blue.

According to embodiments of the present disclosure, the corresponding target format data is determined according to the third scene identification of the target data, the first scene identification of the candidate format setting information and the second scene identification of the candidate format data, and a rendering is performed on the target data according to the target format data. Therefore, a rendering method of embodiments of the present disclosure is applicable to different scenes, and a flexibility of the rendering is improved.

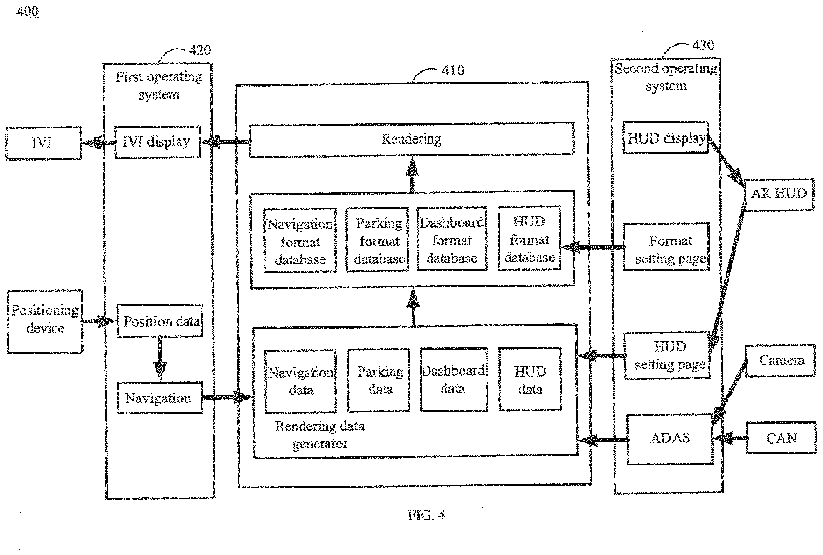

FIG. 4 schematically shows a schematic diagram of a data processing method for a vehicle according to other embodiments of the present disclosure.

As shown in FIG. 4, in an embodiment 400 of the present disclosure, a rendering engine 410 is adapted to a plurality of candidate operating systems. The plurality of candidate operating systems may include, for example, a first operating system 420 and a second operating system 430. The first operating system 420 may include, for example, an Android system, and the second operating system 430 may include, for example, an embedded real-time operating system (e.g., QNX).

When the vehicle is installed with a current operating system, if it is determined that the current operating system is any one or more of the plurality of candidate operating systems, the rendering engine 410 of the vehicle may establish a data connection with the current operating system. Each of the plurality of candidate operating systems has a data connection permission to establish a data connection with the rendering engine 410. After the data connection between the current operating system and the rendering engine 410 is established, the rendering engine 410 may receive target data from the current operating system.

After a rendering is performed on the target data based on the format data and the data to be displayed is obtained, the data to be displayed may be transmitted to the current operating system for display.

A rendering format may be set by the developer on a format setting page of the first operating system 420 or the second operating system 430. In embodiments of the present disclosure, a format setting page provided by the second operating system 430 is illustrated by way of example. The second operating system 430 may include, for example, a general format setting page and an HUD setting page. A format setting of a display content to be displayed on a vehicle display screen of the vehicle may be performed by the developer on the general format setting page, and a format setting of a display content to be displayed on an HUD system of the vehicle may be performed by the developer on the HUD setting page.

The target data of the vehicle may come from a positioning device, a camera, a CAN bus system, etc. The positioning device may include, for example, GPS, radar, etc., and is used to provide position data. The camera may be used to capture image data. The CAN bus system may provide fuel consumption data and other operation data of the vehicle. The data from the camera and the CAN bus system may be used as data of an advanced driving assistance system (ADAS). The data from the advanced driving assistance system is subsequently rendered and displayed for a driving warning.

According to a scene classification, a plurality of scenes may include, for example, a navigation scene, a self-parking scene, a scene of a data display using a dashboard, a scene of a data display using a Head-Up Display (HUD) system. Target data corresponding to the plurality of scenes one to one may include, for example, navigation data, parking data, dashboard data, and HUD data.

The format data is stored, for example, in a format database. According to a scene classification, a plurality of scenes may include, for example, a navigation scene, a self-parking scene, a scene of a data display using a dashboard, a scene of a data display using a Head-Up Display (HUD) system. A plurality of format databases corresponding to the plurality of scenes one to one may include, for example, a navigation format database, a parking format database, a dashboard format database, and an HUD format database.

After the target data for a scene is acquired, the format data of the corresponding scene may be acquired from the corresponding format database based on the target data and the format setting information of the corresponding scene, then a rendering may be performed on the target data based on the format data to generate data to be displayed, and the data to be displayed may be transmitted to the current operating system for display. The current operating system may include, for example, the first operating system 420, which is displayed through a vehicle display screen in an In-Vehicle Infotainment (IVI). Alternatively, the current operating system may include, for example, the second operating system 430, which is displayed through an HUD display screen.

It may be understood that the rendering engine of embodiments of the present disclosure is an independent engine, which may run on an independent chip, and the rendering engine may be applied to different operating systems. Therefore, the rendering engine may be applied to different operating systems once developed, and an applicability of the rendering engine may be improved.

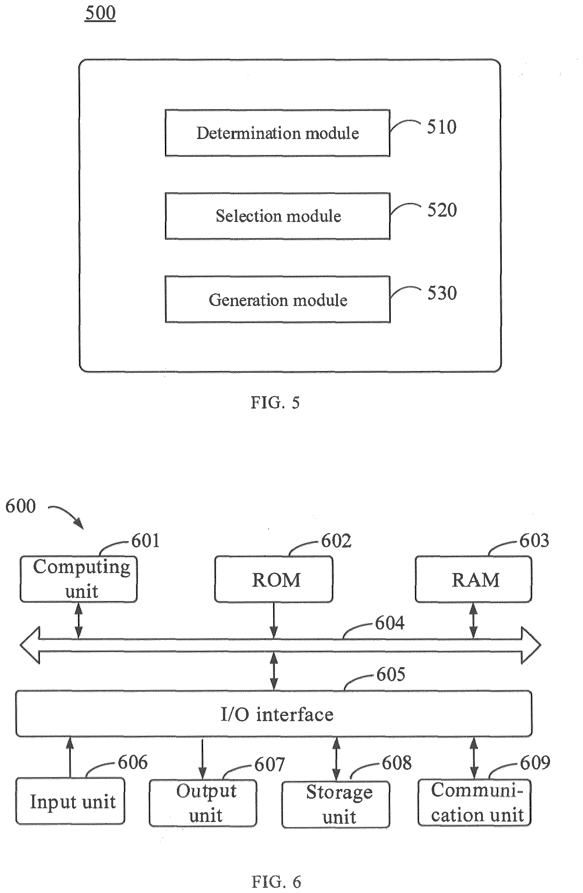

FIG. 5 schematically shows a block diagram of a data processing apparatus for a vehicle according to embodiments of the present disclosure.

As shown in FIG. 5, a data processing apparatus 500 for a vehicle in embodiments of the present disclosure includes, for example, a determination module 510, a selection module 520, and a generation module 530.

The determination module 510 may be used to determine a target format setting information associated with target data for a vehicle, in response to an acquisition of the target data. According to embodiments of the present disclosure, the determination module 510 may perform, for example, the operation S210 described above with reference to FIG. 2, which will not be repeated here.

The selection module 520 may be used to select, from a plurality of candidate format data, target format data associated with the target format setting information. According to embodiments of the present disclosure, the selection module 520 may perform, for example, the operation S220 described above with reference to FIG. 2, which will not be repeated here.

The generation module 530 may be used to process the target data based on the target format data to generate data to be displayed. According to embodiments of the present disclosure, the generation module 530 may perform, for example, the operation S230 described above with reference to FIG. 2, which will not be repeated here.

According to embodiments of the present disclosure, the target format setting information includes a first scene identification and a target format information, the plurality of candidate format data is divided into a plurality of groups, and each of the plurality of groups has a second scene identification; the selection module 520 includes a first selection sub-module and a second selection sub-module. The first selection sub-module is used to select a target group from the plurality of groups based on the first scene identification, wherein the second scene identification of the target group is consistent with the first scene identification; the second selection sub-module is used to select the target format data from the candidate format data in the target group based on the target format information.

According to embodiments of the present disclosure, the target data includes a third scene identification; and the determination module 510 is further used to: determine the target format setting information from a plurality of candidate format setting information, in response to the acquisition of the target data for the vehicle, wherein a first scene identification of the target format setting information is consistent with the third scene identification.

According to embodiments of the present disclosure, the apparatus 500 may further include an establishment module and a receiving module. The establishment module is used to establish a data connection with a current operating system, in response to determining that the current operating system is any one or more of a plurality of candidate operating systems, wherein each of the plurality of candidate operating systems has a data connection permission; the receiving module is used to receive the target data from the current operating system.

According to embodiments of the present disclosure, the apparatus 500 may further include: a transmission module used to transmit the data to be displayed to the current operating system, in response to a generation of the data to be displayed.

According to embodiments of the present disclosure, the first scene identification includes at least one selected from: an identification for a navigation scene, an identification for a self-parking scene, an identification for a scene of a data display using a dashboard, or an identification for a scene of a data display using a Head-Up Display HUD system.

According to embodiments of the present disclosure, the target data includes at least one selected from: traffic data, or operation data of the vehicle.

In the technical solution of the present disclosure, an acquisition, a storage, a use, a processing, a transmission, a provision, a disclosure and an application of user personal information involved comply with provisions of relevant laws and regulations, take essential confidentiality measures, and do not violate public order and good custom. In the technical solution of the present disclosure, authorization or consent is obtained from the user before the user's personal information is obtained or collected.

According to embodiments of the present disclosure, the present disclosure further provides an electronic device, a readable storage medium, and a computer program product.

FIG. 6 shows a block diagram of an electronic device for performing data processing for implementing embodiments of the present disclosure.

FIG. 6 shows a schematic block diagram of an exemplary electronic device 600 for implementing embodiments of the present disclosure. The electronic device 600 is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the electronic device 600 to exchange information/data with other devices through a computer network such as Internet and/or various telecommunication networks.

The computing unit 601 may be various general-purpose and/or dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 601 executes various methods and steps described above, such as the data processing method for the vehicle. For example, in some embodiments, the data processing method for the vehicle may be implemented as a computer software program which is tangibly embodied in a machine-readable medium, such as the storage unit 608. In some embodiments, the computer program may be partially or entirely loaded and/or installed in the electronic device 600 via the ROM 602 and/or the communication unit 609. The computer program, when loaded in the RAM 603 and executed by the computing unit 601, may execute one or more steps in the data processing method for the vehicle described above. Alternatively, in other embodiments, the computing unit 601 may be configured to perform the data processing method for the vehicle by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components, or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A data processing method (200) for a vehicle, comprising:
determining (S210) a target format setting information (120) associated with target data (140, 310) for a vehicle, in response to an acquisition of the target data (140, 310);
selecting (S220), from a plurality of candidate format data (330), target format data (340) associated with the target format setting information (120); and
processing (S230) the target data (140, 310) based on the target format data (340) to generate data to be displayed (150).

2. The method (200) according to claim 1, wherein the target format setting information (120) comprises a first scene identification and a target format information, the plurality of candidate format data (330) is divided into a plurality of groups (331-334), and each of the plurality of groups (331-334) has a second scene identification;
wherein the selecting (S220), from a plurality of candidate format data (330), target format data (340) associated with the target format setting information (120) comprises:
selecting a target group from the plurality of groups (331-334) based on the first scene identification, wherein the second scene identification of the target group is consistent with the first scene identification; and
selecting the target format data (340) from the candidate format data (330) in the target group based on the target format information.

3. The method (200) according to claim 1 or 2, wherein the target data (140, 310) comprises a third scene identification; and the determining (S210) a target format setting information (120) associated with target data (140, 310) for a vehicle, in response to an acquisition of the target data (140, 310) comprises:
determining the target format setting information (120) from a plurality of candidate format setting information (321, 322), in response to the acquisition of the target data (140, 310) for the vehicle,
wherein a first scene identification of the target format setting information (120) is consistent with the third scene identification.

4. The method (200) according to any one of claims 1 to 3, further comprising:
establishing a data connection with a current operating system, in response to determining that the current operating system is any one or more of a plurality of candidate operating systems (420, 430), wherein each of the plurality of candidate operating systems (420, 430) has a data connection permission; and
receiving the target data (140, 310) from the current operating system.

5. The method (200) according to claim 4, further comprising:
transmitting the data to be displayed (150) to the current operating system, in response to a generation of the data to be displayed (150).

6. The method (200) according to any one of claims 1 to 5, wherein the first scene identification comprises at least one selected from:
an identification for a navigation scene, an identification for a self-parking scene, an identification for a scene of a data display using a dashboard, or an identification for a scene of a data display using a Head-Up Display HUD system.

7. The method (200) according to any one of claims 1 to 6, wherein the target data (140, 310) comprises at least one selected from: traffic data, or operation data of the vehicle.

8. A data processing apparatus (500) for a vehicle, comprising:
a determination module (510) configured to determine a target format setting information associated with target data for a vehicle, in response to an acquisition of the target data;
a selection module (520) configured to select, from a plurality of candidate format data, target format data associated with the target format setting information; and
a generation module (530) configured to process the target data based on the target format data to generate data to be displayed.

9. The apparatus (500) according to claim 8, wherein the target format setting information comprises a first scene identification and a target format information, the plurality of candidate format data is divided into a plurality of groups, and each of-the plurality of groups has a second scene identification;
wherein the selection module (520) comprises:
a first selection sub-module configured to select a target group from the plurality of groups based on the first scene identification, wherein the second scene identification of the target group is consistent with the first scene identification; and
a second selection sub-module configured to select the target format data from the candidate format data in the target group based on the target format information.

10. The apparatus (500) according to claim 8 or 9, wherein the /target data comprises a third scene identification; and the determination module (510) is further configured to:
determine the target format setting information from a plurality of candidate format setting information, in response to the acquisition of the target data for the vehicle,
wherein a first scene identification of the target format setting information is consistent with the third scene identification.

11. The apparatus (500) according to any one of claims 8 to 10, further comprising:
an establishment module configured to establish a data connection with a current operating system, in response to determining that the current operating system is any one or more of a plurality of candidate operating systems, wherein each of the plurality of candidate operating systems has a data connection permission; and
a receiving module configured to receive the target data from the current operating system,
preferably, the apparatus (500) further comprises:
a transmission module configured to transmit the data to be displayed to the current operating system, in response to a generation of the data to be displayed.

12. The apparatus (500) according to any one of claims 8 to 11, wherein the first scene identification comprises at least one selected from:
an identification for a navigation scene, an identification for a self-parking scene, an identification for a scene of a data display using a dashboard, or an identification for a scene of a data display using a Head-Up Display HUD system,
preferably, wherein the target data comprises at least one selected from: traffic data, or operation data of the vehicle.

13. An electronic device (600), comprising:
at least one processor; and
a memory communicatively connected to the at least one processor, wherein the memory stores instructions executable by the at least one processor, and the instructions, when executed by the at least one processor, cause the at least one processor to implement the method according to any one of claims 1 to 7.

14. A non-transitory, computer-readable storage medium having computer instructions therein, wherein the computer instructions are configured to cause a computer to implement the method according to any one of claims 1 to 7.

15. A computer program product containing a computer program, wherein the computer program, when executed by a processor, causes the processor to implement the method according to any one of claims 1 to 7.
